Europäisches Patentamt

European Patent Office

Office européen des brevets

(11) Publication number : **0 460 901 A2**

## (12) EUROPEAN PATENT APPLICATION

(21) Application number : 91305009.2

(51) Int. Cl.⁵ : **B23K 20/12, C23C 26/00**

(22) Date of filing : 03.06.91

(30) Priority : 06.06.90 GB 9012574
06.06.90 GB 9012572
06.06.90 GB 9012571

(43) Date of publication of application :
11.12.91 Bulletin 91/50

(84) Designated Contracting States :
AT CH DE DK ES FR GB GR IT LI NL SE

(71) Applicant : THE WELDING INSTITUTE
Abington Hall
Abington Cambridge CB1 6AL (GB)

(72) Inventor : Thomas, Wayne Morris
6 Howe Road
Haverhill, Suffolk CB9 9NJ (GB)
Inventor : Nicholas, Edward David
106 Abbotts Road
Haverhill, Suffolk CB9 0DH (GB)

(74) Representative : Skone James, Robert
Edmund et al
GILL JENNINGS & EVERY 53-64 Chancery
Lane
London WC2A 1HN (GB)

(54) Surfacing a convex substrate.

(57) A method of providing a composite material surface (7), such as a metal matrix composite, on a convex substrate (1), such as a piston. The method comprises urging a rotating consumable member (5), incorporating the components of the composite material, against the convex surface whereby the composite material is laid down on the surface. Relative traverse movement is caused between the consumable member (5) and the substrate (1).

EP 0 460 901 A2

Fig. 1.

The invention relates to methods of providing a material surface on a convex surface of a substrate.

There are several situations in which it is necessary to provide a hard wearing surface on a convex substrate such as a cylinder. For example, one common application is that of marine pistons which need to be provided with hard wearing, annular surfaces both during manufacture and periodically during their life. It is particularly expensive and difficult to refurbish such pistons since they have to be dismantled from their operative position, transported to a refurbishment site, and then reassembled after refurbishment.

In accordance with the present invention, a method of providing a composite material surface on a convex surface of a substrate comprises urging a rotating consumable member, incorporating the components of the composite material, against the convex surface whereby the composite material is laid down on the surface, and causing relative traverse movement between the consumable member and the substrate.

We have realised that it is possible to provide a hard wearing composite material surface on a convex substrate by using a friction surfacing technique. This is particularly important in the case of repairing pistons, for example for marine engines.

Typically, the consumable member is rotated in a fixed position while the substrate is traversed past the consumable member. In the case of a cylindrical substrate such as a piston, the substrate is simply rotated.

The invention is particularly suitable for the formation of a material matrix composite deposit such as a metal matrix composite (MMC) or for the improvement of an existing MMC. This is achieved either by suitably constructing the consumable member from a parent material and another, separate material, such as a ceramic which then intermix during the laying down process; or by constructing the consumable member from the composite material itself. In the latter case the composite material could have been formed using any conventional technique. In the former case, any of the techniques described in our co-pending European patent application of even date entitled "Forming Composite Materials" (Agents ref: 30/3149/02) could be used. The disclosure in that patent application is incorporated herein by reference.

Examples of suitable ceramics are silicon carbide - SiC, silicon nitride - $Si_3N_4$, boron carbide - BC, titanium dioxide - $TiO_2$, boron nitride - BN, alumina - $Al_2O_3$, aluminium nitride - AlN, zirconia - $ZrO_2$ (transformation toughening), silica - $SiO_2$, and also compounds of ceramics ie. sialon - $Si_3N_4/AlN/Al_2O_3$, and corundum - $Al_2O_3 + SiO_2$. In particular the use of Zirconia ($ZrO_2$) which provides crack inhibiting characteristics i.e. its localised 4-5% volumetric increase in particulate size caused by the stress in the immediate vicinity of the crack tip which will offer toughness as well as improved wear properties.

Other examples include intermetallic compounds such as the aluminides - Titanium Aluminide ($Ti_3Al$), Nickel Aluminide (NiAl), Iron Aluminide (FeAl), and Niobium Aluminide ($NbAl_3$). The invention is also applicable to the manufacture/extrusion of shape memory alloys (SMA) such as Nickel - Titanium Alloys.

Both ferrous and non-ferrous materials may be used for the matrix material.

In other applications, the invention can be used to provide buffer (transition) layers. For example austenitic stainless steel can be provided onto low alloy steel or martensitic steel components to enable improved deposition/adhesion characteristics for subsequent deposition of (stellite) cobalt base alloy. The invention also enables previously "difficult" substrates to be surfaced due to the scouring effect of the consumable. For example, MMCs can be laid down on cast iron substrates.

In one arrangement, a bush is provided around the consumable member as is also described in more detail in our co-pending European patent application referred to above.

The invention could be performed underwater or in the presence of an inert shielding gas or in the presence of an active agent for surface treatment.

Thus, in this case the substrate surface is treated with an agent to remove contaminates, the agent being removed at least on completion of the surfacing process.

In one example, the agent is activated or energised by the frictional movement itself.

The active agent may comprise a powder, paste, liquid, or gaseous atmosphere and is used to etch or dissolve the surface layer of the component to reduce or eliminate the natural oxide or other surface contaminate.

An example of a suitable paste is a flux compound Murex Aluminium Welding Saffire Flux such as is used in oxigas welding of steels. This flux may be pasted on to the substrate surface. At the elevated temperature of the friction surfacing process the flux is activated and chemically attacks the surface but as the friction surfacing operation progresses it is dispersed so as not to remain as a barrier.

The surface treatment may be carried-out prior to the frictional surfacing process, the surface being protected by suitable means from significant further contamination or oxidation until the joining process is completed. For example, the material to be surfaced may be etched in a suitable chemical re-agent and then friction surfaced in the presence of the etchant or alternatively under a protective fluid layer (such as oil or water) or gaseous protection such as an inert gas or non reactive gas such as argon or nitrogen respectively. Sodium Floride may be used for stainless steel and nickel based alloy. The objective of the flux or etchant is to reduce the contaminated or oxide layers on the material such that the friction surfacing process is more effective and higher bond strengths are achieved, even though one component is virtually not contributing directly to the plasticised intermediate layer which is formed.

The plasticised material (which is largely developed by the consumable member) is at a sufficient temperature and pressure, together with relative movement, to disperse the active agent (if still present while frictioning) so as to effect a reliable joint.

An example of a method according to the invention will now be described with reference to the accompanying drawings, in which:-

Figure 1 is a schematic, perspective view of a piston after surfacing and showing the consumable member;

Figure 2 is a section through part of a wear pad;

Figure 3 is a cross-section through the piston shown in Figure 1 illustrating the position of the wear pads;

Figure 4 is a section through the piston grooves;

Figures 5A-5D illustrate different consumable member cross-sections; and,

Figure 6 to 8 illustrate different examples of consumable members.

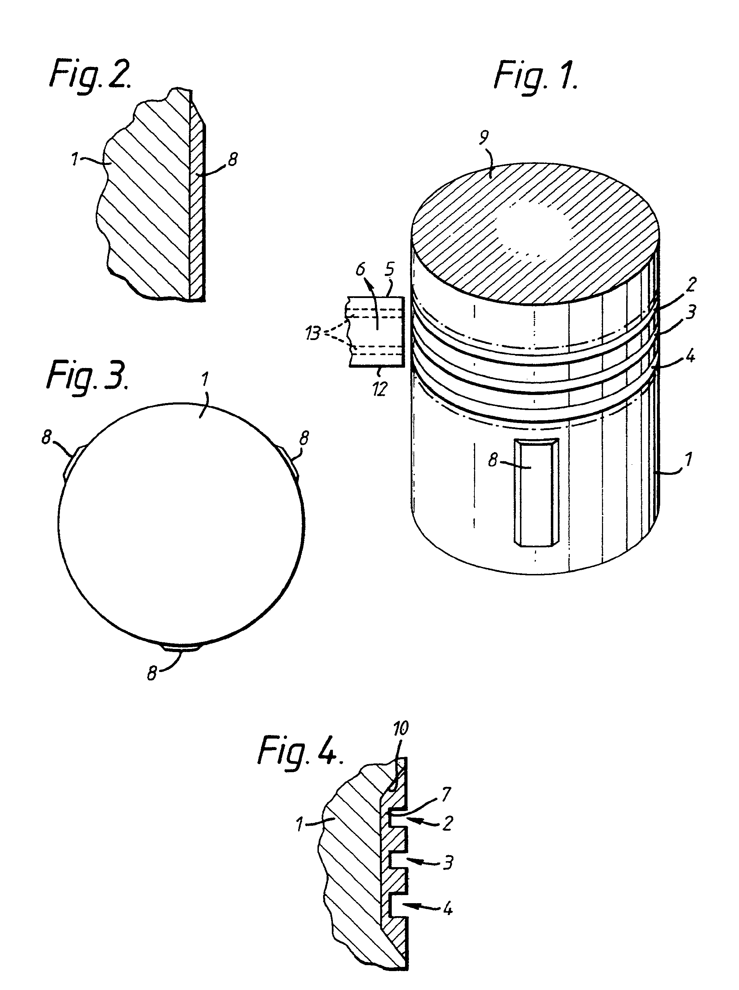

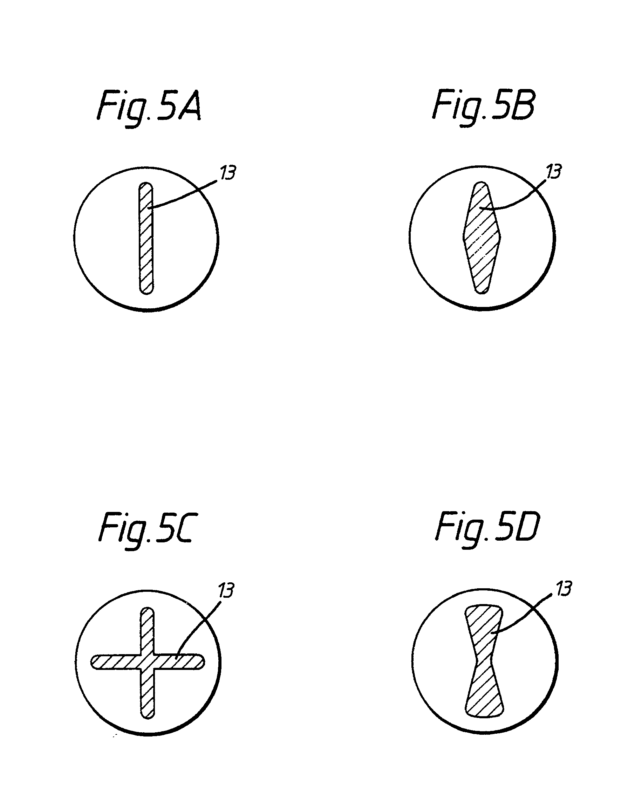

Figure 1 illustrates a piston 1 having a cylindrical form with three circumferential grooves 2-4 formed in MMC material 7 in an annular recess 10 of the piston (Figure 4). A consumable member 5 is provided in alignment with the annular recess 10 and is formed from a parent metal 12 with two inserts of ceramic material 13 as described in more detail in our co-pending European patent application mentioned above. Initially the recess 10 is machined out and then the consumable member 5 is rotated as shown by an arrow 6 while being urged into the recess 10 and at the same time the cylinder 1 is slowly rotated so that the consumable member 5 traverses along the recess 10. During this movement, heat is generated at the interface between the consumable member 5 and the piston 1 via a plasticized layer causing material from the consumable member to transfer to the recess 10 to form the hard wearing MMC reinforcement layer 7 most clearly seen in Figure 4. After the recess 10 has been surfaced, the annular grooves 2,3,4 are machined or ground in the MMC layer 7.

Three wear pads 8 are also provided on the piston 1 using a similar technique in which the piston 1 is moved axially relative to the consumable 5 while the consumable rotates. The circumferential positions of the wear pads can be seen in Figure 3 while Figure 2 is a section through part of a wear pad 8.

Finally, a further MMC surface 9 is provided on the front face of the piston 1 by applying the rotating consumable member 5 under pressure to the front face while rotating the piston 1.

Figures 5A-5D illustrate various consumable member cross-sections. In each case the centres of bores 13 containing ceramic material could be offset slightly or greatly from the axis of the consumable member.

Although the consumable has been described as being formed of separate materials, it could instead be formed of a prefabricated MMC which is then laid down using the friction surfacing technique.

In all the examples of consumable members these may comprise a metal shroud or sheath for the majority component of say an MMC product together with one or more inserts of the required additional components which may be powered or granulated particulate together with further metallic alloys according to requirements.

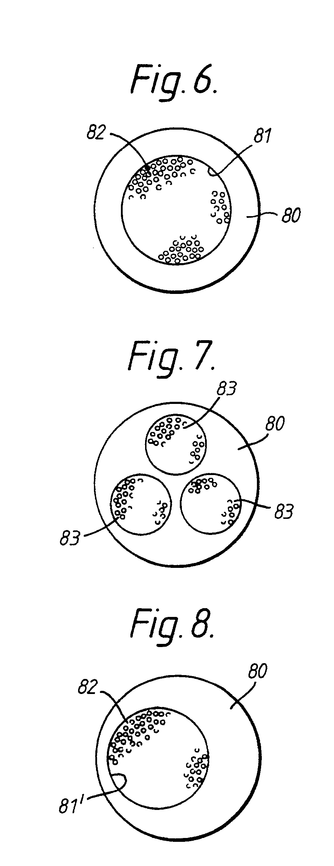

In the simplest case the outer or major component 80 (Figure 6) is a formable, extrudable or machinable ferrous or non-ferrous metallic alloy, such as an alloy steel, stainless steel or an aluminium alloy, the properties of which are to be enhanced. This component is in the form of a thick walled tube with a central hollow bore 81 into which the further component or components such as ceramic core wire 82 are added. Figure 7 shows a modification in which a number of off axis bore holes are provided, each filled with ceramic core wire 83. Figure 8 illustrates a consumable with a single off axis bore 81'. Likewise a variety of bore shapes may be utilised.

Any combination of these arrangements may be employed as desired. For example the outer component can be a round bar with one or more bores which are filled with other metallic materials and/or particulates. The additional metallic component may be a single virtually pure metal or alloy, or may be a partially sintered material or a fully sintered and compacted material. The particulate may be in granulated or powdered form, or may be part of the sintered material or both. Further, continuous ceramic fibres could be used inserted into the consumable which are sufficiently broken up by the action of the friction process to become whisker reinforced MMC.

These and other variations are within the scope of the invention, whereby, by means of generating a plasticised zone by relative motion under applied load, a combination material is produced such as an MMC material. In particular the plasticised zone or amalgum can be separately extruded, or deposited into a substrate such as by so called friction surfacing (as described above).

## Claims

1.  A method of providing a composite material surface on a convex surface of a substrate, the method comprising urging a rotating consumable member, incorporating the components of the composite material, against the convex surface whereby the composite material is laid down on the surface, and causing relative traverse movement between the consumable member and the substrate.

2. A method according to claim 1, wherein the composite material surface comprises a metal matrix composite.

3. A method according to claim 1 or claim 2, wherein the consumable member is constructed from a parent material and another, separate material.

4. A method according to claim 3, wherein the separate material is a ceramic.

5. A method according to claim 1 or claim 2, wherein the consumable member is constructed from the composite material.

6. A method according to any of the preceding claims, wherein the substrate comprises a piston.

7. A method according to any of the preceding claims, wherein the substrate surface is treated with an agent to remove contaminates, the agent being removed at least on completion of the surfacing process.

8. A method according to any of the preceding claims, further comprising urging the rotating consumable member against a planar surface of the substrate whereby the composite material is laid down on the surface, and causing relative traverse movement between the consumable member and the substrate.

9. A method of providing a composite material surface on a planar surface of a piston, the method urging a rotating consumable member, incorporating the components of the composite material, against the surface whereby the composite material is laid down on the surface, and causing relative traverse movement between the consumable member and the surface.

Fig.2.

Fig.1.

Fig.3.

Fig.4.

6

Fig.5A

Fig.5B

Fig.5C

Fig.5D

Fig. 6.

Fig. 7.

Fig. 8.